# EUROPEAN PATENT APPLICATION

(11) **EP 2 916 592 A1**
(43) Date of publication of application: **09.09.2015**
(21) Application number: 13850896.5
(22) Date of filing: 24.10.2013
(51) Int. Cl.: H04W 48/16

(54) **PACKET DATA NETWORK TYPE MANAGEMENT METHOD, DEVICE, AND SYSTEM**

(30) Priority: 05.11.2012 CN 201210434949
(71) Applicant: ZTE Corporation, Shenzhen, Guangdong 518057 (CN)
(72) Inventor: ZHOU, Xingyue, Shenzhen Guangdong 518057 (CN); LIU, Guoyan, Shenzhen Guangdong 518057 (CN); ZHU, Chunhui, Shenzhen Guangdong 518057 (CN)
(74) Representative: Brunazzi, Stefano
(86) International application number: PCT/CN2013/085909
(87) International publication number: WO 2014/067420

(57) **Abstract**

A method, device and system for managing a packet data network type management are disclosed. The method comprises: a User Equipment, UE, sends a request message to a WLAN AN, wherein the request message carries a packet data network type requested by the UE; the UE receives an acknowledgement message returned by the WLAN AN to the UE, wherein the acknowledgement message carries a packet data network type decided by a network side. It is solved the technical problem in the related art of the waste of the address resources, which is caused by the fact that the addresses corresponding to the packet data network type subscribed by the user in the subscription information are all directly allocated to the UE in advance, thereby achieving the technical effects of reducing the wasted address resources and improving the address resource utilization rate.

## Description

### Technical Field

The present invention relates to the field of communications, including e.g., a method, device and system for managing a packet data network type.

### Background

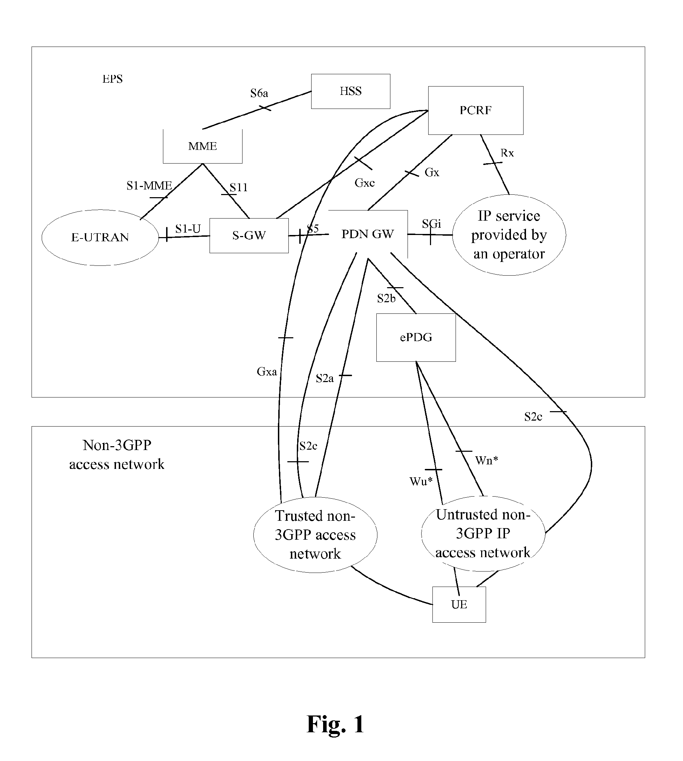

The Evolved Packet System (EPS) of the 3rd Generation Partnership Project (3GPP) includes an Evolved Universal Terrestrial Radio Access Network (E-UTRAN), a Mobility Management Entity (MME), a Serving Gateway (S-GW), a Packet Data Network Gateway (P-GW or PDN GW), a Home Subscriber Server (HSS), a Policy and Charging Rules Function (PCRF) entity and other support nodes, specifically as shown in Fig. 1. The several network elements are specifically described below.

The MME (Mobility Management Entity) is used for taking charge of mobility management, the process of the Non-Access-Stratum signalling, the management of the user mobility management context and other works related to the control plane.

The S-GW is an access gateway device which is connected to the E-UTRAN and is used for forwarding data between the E-UTRAN and the P-GW, and takes charge for caching the paging wait data.

The P-GW is a border gateway of the EPS and a Packet Data Network (PDN), and takes charge of the functions such as the access of the PDN and forwarding data between the EPS and the PDN.

The PCRF is connected to an operation Internet Protocol (IP) service network through a receiving interface (Rx) to acquire the service information. In addition, the PCRF is further connected to gateway devices in the network through a Gx/Gxa/Gxc interface, and takes charge of initiating an establishment of an IP bear, so as to ensure the Quality of Service (QoS) of service data and perform a charging control.

As shown in Fig. 1, there is a Wireless Local Area Network (WLAN). The WLAN can be used as a non-3GPP system to access an Evolved Packet Core (EPC), which refers a interconnect problem for the fixed mobile convergence, which is concerned by many operators.

At present, more and more operators hope that the WLAN can be considered as a trusted non-3GPP for an access to the EPC. The research on the interconnect problem that a UE accesses an EPC through an S2a interface gradually attracts more and more attention, and there are already related solutions. However, in the related art, the UE can not notify the network side which packet data network type connection the UE wants to establish. When the packet data network type subscribed to a certain Access Point Name (APN) by the UE is Internet Protocol Version 4/ Internet Protocol Version 6, IPv4/IPv6 dual stack type, the UE can request a single IPv4, a single IPv6 and an IPv4/IPv6 dual stack. Since the UE cannot notify the network side which packet data network type connection the UE wants to establish, when the user which subscribes the IPv4/IPv6 dual stack type only establishes a single IPv4 packet data network connection or a single IPv6 packet data network connection, a network side will still establish a dual stack packet data network connection for the UE, i.e. the network side will still allocate an IPv4 address and an IPv6 protocol stack to the UE, which causes an unnecessary waste of address.

Aiming at the problem, no effective solution has been proposed.

### Summary

A method, device and system for managing packet data network type are provided in the embodiments of the present invention, so as to at least solve the technical problem in the related art of waste of address resources, which caused by the fact that the addresses corresponding to the packet data network type in the subscription information of the UE are all directly allocated to the UE in advance.

According to one aspect of the embodiments of the present invention, a method for managing a packet data network type is provided, comprising: sending, by a User Equipment, UE, a request message to a Wireless Local Area Network Access Network, WLAN AN, wherein the request message carries a packet data network type requested by the UE; and receiving, by the UE, an acknowledgement message returned by the WLAN AN to the UE, wherein the acknowledgement message carries a packet data network type decided by a network side.

According to an embodiment of the present invention, the packet data network type requested by the UE comprises at least one of the following: a single Internet Protocol Version 4, IPv4, type, a single Internet Protocol Version 6, IPv6 type and an IPv4/IPv6 dual stack type, and the packet data network type decided by the network side comprises at least one of the following: a single IPv4 type, a single IPv6 type and an IPv4/IPv6 dual stack type.

According to an embodiment of the present invention, the method further comprises: judging, by the WLAN AN, whether the UE is allowed to establish a connection corresponding to the packet data network type requested by the UE according to one of the following information: subscription information of the UE at the network side, capacity of the WLAN AN and configuration information of the WLAN AN; and based on that a judgment result is that the UE is allowed to establish the connection corresponding to the packet data network type requested by the UE, carrying, by the WLAN AN, in the acknowledgement message the packet data network type requested by the UE as the packet data network type decided by the network side, and based on that the judgment result is that the UE is not allowed to establish the connection corresponding to the packet data network type requested by the UE, refusing, by the WLAN AN, the packet data network type requested by the UE.

According to an embodiment of the present invention, in a condition that the packet data network type decided by the network side is the IPv4/IPv6 dual stack type, and after receiving, by the UE, the acknowledgement message returned by the WLAN AN to the UE, the method further comprises: acquiring, by the UE, a packet data network IPv4 address and a packet data network connection identifier through a Dynamic Host Configuration Protocol Version 4, DHCPv4, process; and acquiring, by the UE, a packet data network IPv6 prefix through a Dynamic Host Configuration Protocol Version 6, DHCPv6, process, wherein the packet data network IPv4 address and the packet data network IPv6 prefix are allocated by a Packet Data Network GateWay, P-GW, to the UE.

According to an embodiment of the present invention, acquiring, by the UE, the packet data network IPv6 prefix through the DHCPv6 process comprises: sending, by the UE a DHCPv6 message to the WLAN AN to request the packet data network IPv6 prefix, wherein the DHCPv6 message carries the packet data network connection identifier acquired in the DHCPv4 process, and/or the DHCPv6 message is a message encapsulated by using the packet data network connection identifier; and receiving, by the UE, a DHCPv6 message returned by the WLAN AN, wherein the packet data network IPv6 prefix is carried in the DHCPv6 message returned by the WLAN AN.

According to an embodiment of the present invention, in a condition that the packet data network type decided by a network side is the IPv4/IPv6 dual stack type after receiving, by the UE, the acknowledgement message returned by the WLAN AN to the UE, the method further comprises: acquiring, by the UE, a packet data network IPv6 prefix and a packet data network connection identifier through a Dynamic Host Configuration Protocol Version 6, DHCPv6, process; and acquiring, by the UE, a packet data network IPv4 address through a Dynamic Host Configuration Protocol Version 4, DHCPv4, process, wherein the packet data network IPv6 prefix and the packet data network IPv4 address are allocated by Packet Data Network GateWay, P-GW, to the UE.

According to an embodiment of the present invention, acquiring, by the UE, a packet data network IPv4 address through the DHCPv4 process comprises: sending, by the UE a DHCPv4 message to the WLAN AN to request the packet data network IPv4 address, wherein the DHCPv4 message carries the packet data network connection identifier acquired in the DHCPv6 process, and/or the DHCPv4 message is a message encapsulated by using the packet data network connection identifier; and receiving, by the UE, a DHCPv4 message returned by the WLAN AN, wherein the packet data network IPv4 address is carried in the DHCPv4 message returned by the WLAN AN.

According to an embodiment of the present invention, the packet data network connection identifier comprises: a Generic Routing Encapsulation, GRE, key and/or a Virtual Local Area Network IDentity, VLAN ID.

According to an embodiment of the present invention, sending, by the UE, the request message to the WLAN AN comprises: triggering, by a message transmitted on a Non-Seamless WLAN Offload, NSWO, connection, the UE to request the packet data network type from the WLAN AN; and/or triggering, by a Point to Point Protocol, PPP, the UE to request the packet data network type from the WLAN AN.

According to an embodiment of the present invention, the request message comprises at least one of the following: a DHCPv4 discovering message, a DHCPv6 request message and a Router Solicitation, RS, router request message; and the acknowledgement message comprises at least one of the following: a DHCPv4 offering message, a DHCPv4 acknowledgement message, a DHCPv6 advertising message, a DHCPv6 replying message and a Router Advertisement, RA message.

According to an embodiment of the present invention, the WLAN AN is a trusted WLAN access network.

According to another aspect of the embodiment of the present invention, a device for managing a packet data network type is provided, located in a User Equipment, UE, comprising: a sending element, configured to send a request message to a Wireless Local Area Network Access Network, WLAN AN, wherein the request message carries a packet data network type requested by the UE; and a receiving element, configured to receive an acknowledgement message returned by the WLAN AN, wherein the acknowledgement message carries a packet data network type decided by a network side.

According to an embodiment of the present invention, the device further comprising: a first acquiring element, configured to, in a condition that the packet data network type decided by the network side is an Internet Protocol Version 4/ Internet Protocol Version 6, IPv4/IPv6, dual stack type, and after the UE receives the acknowledgement message returned by the WLAN AN to the UE, acquire a packet data network IPv4 address and a packet data network connection identifier through a Dynamic Host Configuration Protocol Version 4, DHCPv4, process; and a second acquiring element, configured to acquire a packet data network IPv6 prefix through a Dynamic Host Configuration Protocol Version 6, DHCPv6, process, wherein the packet data network IPv4 address and the packet data network IPv6 prefix are allocated by a Packet Data Network GateWay, P-GW, to the UE.

According to an embodiment of the present invention, the second acquiring element comprises: a sending component, configured to send a DHCPv6 message to the WLAN AN to request the packet data network IPv6 prefix, wherein the DHCPv6 message carries the packet data network connection identifier acquired in the DHCPv4 process, and/or the DHCPv6 message is a message encapsulated by using the packet data network connection identifier; and a receiving component, configured to receive a DHCPv6 message returned by the WLAN AN, wherein the packet data network IPv6 prefix is carried in the DHCPv6 message returned by the WLAN AN.

According to the other aspect of the embodiment of the present invention, a device for managing a packet data network type, located in a Wireless Local Area Network Access Network, WLAN AN, comprising: a receiving element, configured to receive a request message sent by a User Equipment, UE, wherein the request message carries a packet data network type requested by the UE; and a returning element, configured to return an acknowledgement message returned to the UE, wherein the acknowledgement message carries a packet data network type decided by a network side.

According to an embodiment of the present invention, the returning element further comprises: a judging component, configured to judge whether the UE is allowed to establish a connection corresponding to the packet data network type requested by the UE according to one of the following information: subscription information of the UE at the network side, capacity of the WLAN AN and configuration information of the WLAN AN; and a returning component, configured to, based on that a judgment result is that the UE is allowed to establish the connection corresponding to the packet data network type requested by the UE, carry in the acknowledgement message the packet data network type requested by the UE as the packet data network type decided by the network side, and based on that the judgment result is that the UE is not allowed to establish the connection corresponding to the packet data network type requested by the UE, refuse the packet data network type requested by the UE.

According to another embodiment of the present invention, a system for managing a packet data network type, comprising: the UE provided with the above device for managing the packet data network type, and the WLAN AN provided with the device for managing the packet data network type.

In the embodiments of the present invention, after the WLAN AN responds to the request message of the UE for requesting the packet data network type, it is judged whether the packet data network type requested by the request message is allowed, and the result is returned. By means of the above manner, it is solved the technical problem in the related art of waste of address resources, which caused by the fact that the addresses corresponding to the packet data network type in the subscription information of the UE are all directly allocated to the UE in advance, thereby achieving the technical effects of reducing the wasted address resources and improving the address resource utilization rate.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic diagram for illustrating a 3GPP EPC structure according to a related art;
Fig. 2 is a flow chart of a method for managing a packet data network type according to an example embodiment of the present invention;
Fig. 3 is another flow chart of a method for managing a packet data network type according to an example embodiment of the present invention;
Fig. 4 is a structural block diagram of a system for managing the packet data network type according to an example embodiment of the present invention;
Fig. 5 is a structural block diagram of a UE according to an example embodiment of the present invention;
Fig. 6 is a structural block diagram of a second acquiring element according to an example embodiment of the present invention;
Fig. 7 is a structural block diagram of a second acquiring element according to an example embodiment of the present invention;
Fig. 8 is a flow chart for showing the packet data connection establishment of IPv4/IPv6 according to the example implementation 1 of an embodiment of the present invention;
Fig. 9 is a flow chart for showing the packet data connection establishment of IPv4/IPv6 according to the example implementation 2 of an embodiment of the present invention; and
Fig. 10 is a flow chart showing establishing a packet data connection of IPv4/IPv6 according to the example implementation 3 of an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

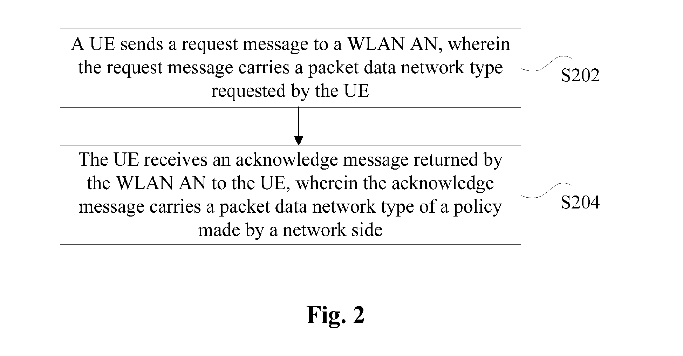

A method for managing a packet data network type management is provided in the example embodiment of the present invention, as shown in Fig. 2, the method comprises the following steps:

In step S202, a UE sends a request message to a WLAN AN, wherein the request message carries a packet data network type requested by the UE.

In step S204, the UE receives an acknowledgement message returned by the WLAN AN to the UE, wherein the acknowledgement message carries a packet data network type decided by a network side.

In this example embodiment, the UE triggers a request message for requesting a packet data network type, a policy message will accordingly be generated at the network side. The packet data network type of the policy made by the network side will be returned to the UE through the WLAN AN, thereby achieving the management on the packet data network type. By means of the above manner, it is solved the technical problem in the related art of waste of the address resources, which caused by the fact that the network side directly allocates the addresses corresponding to the packet data network type in subscription information of the user to the UE in advance, thereby achieving the technical effects of reducing the wasted address resources and improving the address resource utilization rate.

The above packet data network type requested by the UE may include, but is not limited to at least one of the following: a single IPv4 type, a single IPv6 type and an IPv4/IPv6 dual stack type, and the packet data network type decided by the network side may include, but is not limited to at least one of the following: a single IPv4 type, a single IPv6 type and an IPv4/IPv6 dual stack type.

A WLAN AN may finally judge whether the data network type requested by the user is allowed according to a piece of subscription information of the UE at the network side and the capacity supported by the WLAN AN and/or the configuration information. In one example implementation, the WLAN AN judges whether the UE is allowed to establish a connection corresponding to the packet data network type requested by the UE according to one of the following information: the subscription information of the UE at the network side, the capacity of the WLAN AN and the configuration information of the WLAN AN; and based on that a judgment result is that the UE is allowed to establish the connection corresponding to the packet data network type requested by the UE, the WLAN AN carries in the acknowledgement message the packet data network type requested by the UE as the packet data network type decided by the network side, and based on that the judgment result is that the UE is not allowed to establish the connection corresponding to the packet data network type requested by the UE, the WLAN AN refuses the packet data network types requested by the UE. Alternatively, judging, by the WLAN AN, whether the packet data network type requested by the user is allowed may be conducted after the above step S202, or before the above step S204.

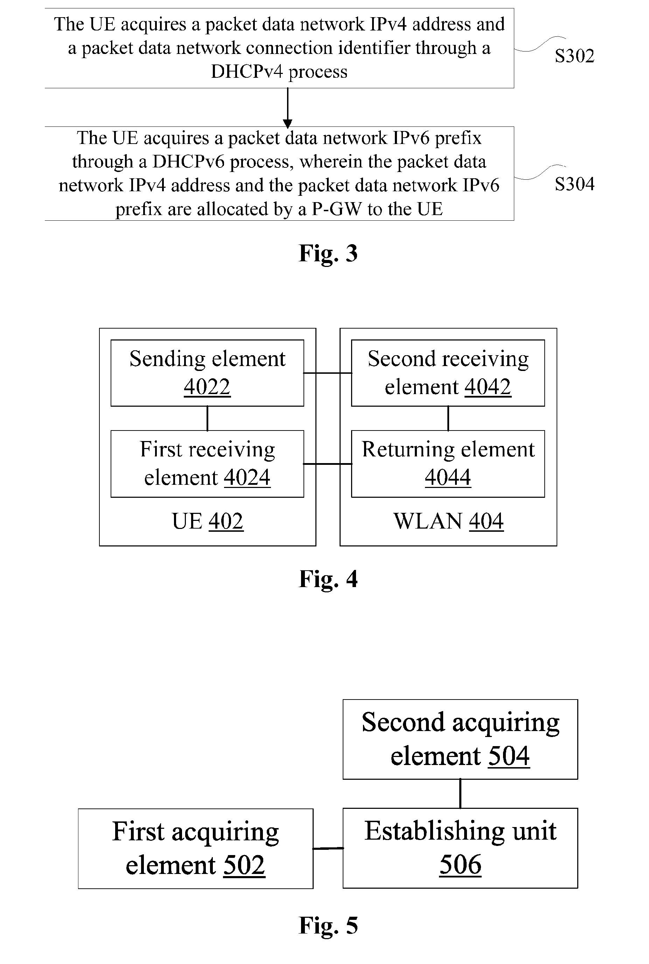

In one example implementation, after the above step S204, the processes of acquiring an allocated resource and establishing a connection may be further comprised. When the packet data network type decided by the network side is an IPv4/IPv6 dual stack type, as shown in Fig. 3, the following steps further may be included:

Step S302, the UE acquires a packet data network IPv4 address and a packet data network connection identifier through a DHCPv4 process.

Step S304, the UE acquires a packet data network IPv6 prefix through a DHCPv6 process, wherein the packet data network IPv4 address and the packet data network IPv6 prefix are allocated by the P-GW to the UE.

Considering that the same packet data network connection identifier is used in the DHCPv6 process and the DHCPv4 process, the packet data network IPv4 address is firstly acquired through the DHCPv4 process and then the packet data network IPv6 prefix is acquired through the DHCPv6 process. In one example implementation, acquiring, by the UE, the packet data network IPv6 prefix through the DHCPv6 process may comprise: the UE sends a DHCPv6 message to the WLAN AN to request the packet data network IPv6 prefix, wherein the DHCPv6 message carries the packet data network connection identifier acquired in the DHCPv4 process, and/or the DHCPv6 message is a message encapsulated by using the packet data network connection identifier; and the UE receives the DHCPv6 message returned by the WLAN AN, wherein the packet data network IPv6 prefix is carried in the DHCPv6 message returned by the WLAN AN. In this manner, it can be realized that the packet data network connection identifiers used by the DHCPv6 process and the DHCPv4 process are the same, which accordingly corresponds to the same tunnel.

It is described above by taking the case of firstly acquiring the packet data network IPv4 address through the DHCPv4 process, and then acquiring the packet data network IPv6 prefix through the DHCPv6 process as an example. It also can be conducted in reverse, that is, the packet data network IPv6 prefix is firstly acquired through the DHCPv6 process, and then the packet data network IPv4 address is acquired through the DHCPv4 process. In this case, it is required that the DHCPv4 message carries the packet data network connection identifier acquired in the DHCPv6 process, and/or the DHCPv4 message is packaged with the packet data network connection identifier.

Alternatively, the packet data network connection identifier may include but is not limited to: a GRE key and/or a VLAN ID.

In the above various implementations, there are many manners to trigger the UE to request a packet data network type from the WLAN AN, for example:
case 1: the UE may be triggered to request the packet data network type from the WLAN AN by a message transmitted on a Non-Seamless WLAN Offload (NSWO) connection; and/or
case 2: the UE may be triggered to request the packet data network type from the WLAN AN by a Point to Point Protocol (PPP).

In the above various example implementations, the request message may comprise but is limited to at least one of the following: a DHCPv4 discovering message, a DHCPv6 request message and a Router Solicitation (RS) router request message, and the acknowledgement message comprises may comprise but is not limited to at least one of the following: a DHCPv4 offering message, a DHCPv4 acknowledgement message, a DHCPv6 advertising message, a DHCPv6 replying message and a Router Advertisement (RA) message. The above WLAN AN may be a trusted WLAN access network.

A system for managing a packet data network type is further provided in the example embodiment. The system is used for realizing the above embodiment and example embodiments, and what has been described is not repeated. As used hereinafter, the term "element" or "component" may realize hardware and/or software combination with a predetermined function. Although the devices described in the following embodiment is preferably implemented by software, but the hardware, or a combination of software and hardware also possibly be conceived. Fig. 4 is a structural block diagram of a system for managing the packet data network type according to an example embodiment of the present invention, as shown in Fig. 4, the system comprises: a UE **402** and a WLAN AN **404.** The UE **402** and the WLAN AN **404** are both provided with the device for managing the packet data network type. The UE **402** and the WLAN AN **404** are specifically described below.

The UE **402** comprises: a sending element **4022,** configured to send a request message to a WLAN AN, wherein the request message carries a packet data network type requested by the UE; and a first receiving element **4024,** configured to receive an acknowledgement message returned by the WLAN AN, wherein the acknowledgement message carries a packet data network type decided by a network side.

The WLAN AN **404** comprises: a second receiving element **4042** which is coupled with the sending element **4022** and is configured to receive the request message sent by the sending element **4022** of the UE, wherein the request message carries the packet data network type requested by the UE; a returning element **4044** which is coupled with the first receiving element **4024** and is configured to return an acknowledgement message to the first receiving element **4024** of the UE, wherein the acknowledgement message carries the packet data network type decided by the network side.

In one example implementation, as shown in Fig. 5, the UE **402** further comprises: a first acquiring element **502,** configured to, in a condition that the packet data network type decided by the network side is an Internet Protocol Version 4/ Internet Protocol Version 6, IPv4/IPv6, dual stack type, and after the UE receives the acknowledgement message returned by the WLAN AN to the UE, acquire a packet data network IPv4 address and a first packet data network connection identifier through a DHCPv4 process; and a second acquiring element **504,** configured to acquire a packet data network IPv6 prefix through a DHCPv6 process, wherein the packet data network IPv4 address and the packet data network IPv6 prefix are allocated by the P-GW to the UE.

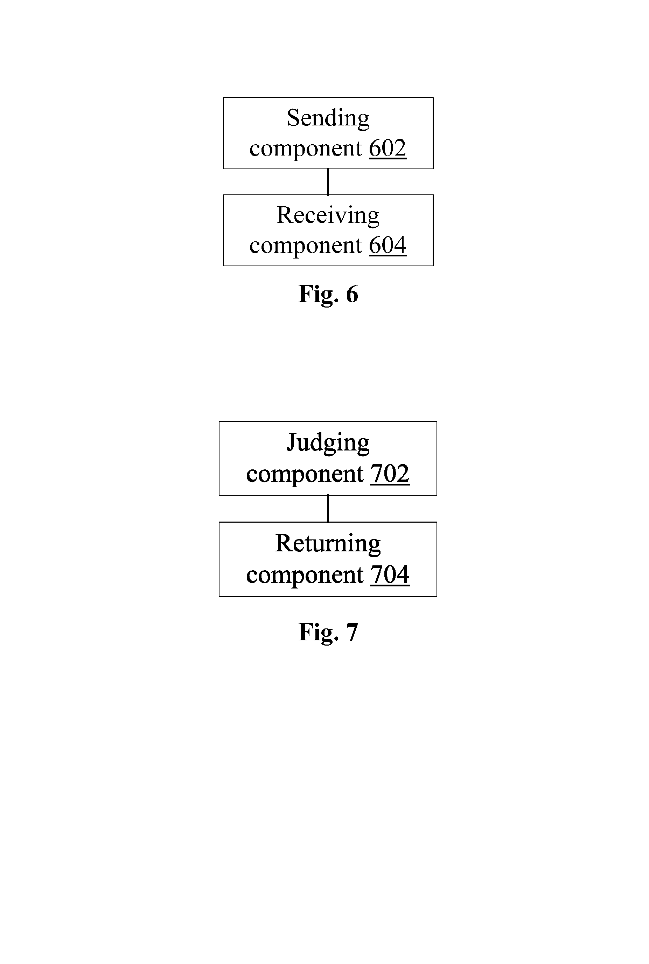

In one example implementation, as shown in Fig. 6, the second acquiring element comprises: a sending component **602,** configured to send a DHCPv6 message to the WLAN AN to request the above packet data network IPv6 prefix, wherein the DHCPv6 message carries the first packet data network connection identifier acquired in the above DHCPv4 process, and/or the DHCPv6 message is a message encapsulated by using the packet data network connection identifier; and a receiving component **604,** coupled with the sending component **602** and configured to receive a DHCPv6 message returned by the WLAN AN, wherein the packet data network IPv6 prefix is carried in the DHCPv6 message returned by the WLAN AN.

In one example implementation, as shown in Fig. 7, the returning element comprises: a judging component **702** which is configured to judge whether the UE is allowed to establish a connection corresponding to the packet data network type requested by the UE according to one of the following information: subscription information of the UE at the network side, the capacity of the WLAN AN and the configuration information of the WLAN AN; and a returning component **704** which is coupled with the judging component **702** and is configured to, based on that a judgment result is that the UE is allowed to establish the connection corresponding to the packet data network type requested by the UE, carry in the acknowledgement message the packet data network type requested by the UE as the packet data network type decided by the network side, and based on that the judgment result is that the UE is not allowed to establish the connection corresponding to the packet data network type requested by the UE, refuse the packet data network type requested by the UE.

A method is provided in the example embodiment of the present invention. In the embodiment, the UE sends a packet data network type requested by the UE to a trusted WLAN access network, and the trusted WLAN access network returns a packet data network type decided by the trusted WLAN access network to the UE. The above packet data network type comprises a single IPv4 type, a single IPv6 type and an IPv4/IPv6 dual stack type. The specific implementation may comprise but is not limited to one of the following three methods:
1) A UE carries packet data network type options in a DHCPv4 message (such as a DHCPv4 discovering message) and sends the packet data network type requested by the UE to a trusted WLAN access network; the trusted WLAN access network carries packet data network type options in a DHCPv4 message (such as a DHCPv4 offering/acknowledgement message) and sends the packet data network type decided by the network side to the UE; or
2) A UE carries packet data network type options in a DHCPv6 message (such as a DHCPv6 request message) and sends the packet data network type requested by the UE to a trusted WLAN access network; the trusted WLAN access network carries packet data network type options in a DHCPv6 message (such as a DHCPv6 advertising/replying message) and sends the packet data network type decided by the network side to the UE; or
3) A UE carries packet data network type options in an RS (Router Solicitation) router request message and sends the packet data network type requested by the UE to a trusted WLAN access network, the trusted WLAN access network carries packet data network type options in an RA (Router Advertisement) message and sends the packet data network type decided by the network side to the UE.

The above three implementations are only several example embodiments of the present invention, and the present invention is not limited thereto.

Meanwhile, when an IPv4/IPv6 dual stack packet data network connection is established, the UE can use the same packet data network connection identifier to associate the IPv4 and IPv6 packets corresponding to the packet data network connection. Alternatively, it can be realized by the following methods:
1) A UE acquires a packet data network IPv4 address and obtains a packet data network connection identifier (such as GRE Key) through a DHCPv4 process. Subsequently, when a packet data network IPv6 prefix is acquired through a DHCPv6 process, the packet data network connection identifier (such as GRE Key) is sent to a trusted WLAN access network, or the transmission is performed on a DHCPv6 message on a point-to-point connection corresponding to the packet data network connection identifier (for example, the transmitted DHCPv6 message may be packaged with the GRE Key).

Several example implementations to specifically describe the above invention are further provided in the embodiment of the present invention.

### Example implementation 1

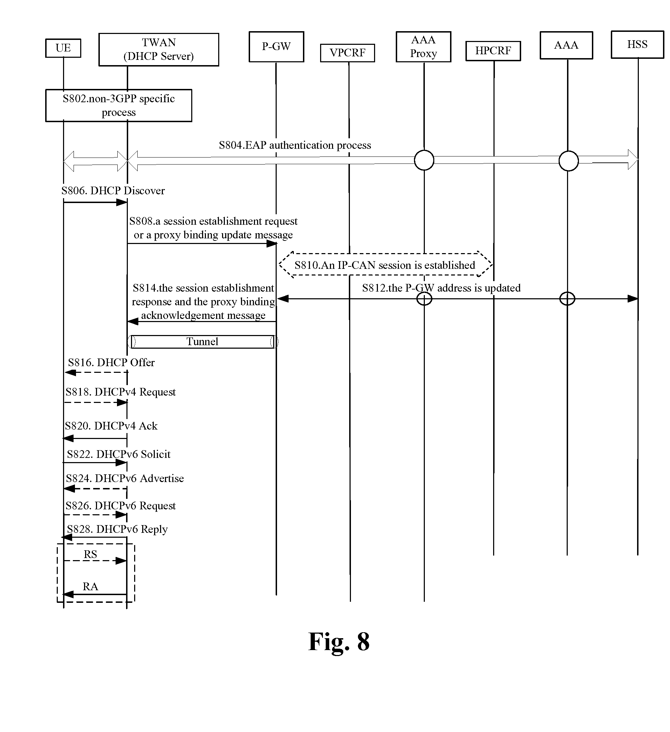

In the example implementation, it is mainly described that when a UE is connected to an EPC through a Trusted Wireless Local Area Network (TWAN) for the first time, the UE initiates a DHCPv4/v6 process to a trusted non-3GPP access network/TWAN supporting a DHCP Server function to request to establish a packet data network connection of which the PDN Type is an IPv4/IPv6 type. The specific flow, as shown in Fig. 8, comprises the following steps:
Step S802, a non-3GPP specific process is performed between the UE and the trusted non-3GPP access network/TWAN.
Step S804, the UE completes an Extensible Authentication Protocol (EAP) authentication process. In the authentication process, the trusted non-3GPP access network may associate a UE Medium Access Control (MAC) address with an International Mobile Subscriber Identification Number (IMSI).
Step S806, the UE may send a DHCP Discover (DHCP discovering message) to the trusted non-3GPP access network, wherein the DHCP Discover carries a request message for requesting a packet data network connection type which is an IPv4/IPv6 dual stack type.
Step S808, after receiving the DHCP Discover, the TWAN sends a session establishment request or a proxy binding update message to a PDN GW (i.e. P-GW), wherein the session establishment request or the proxy binding update message carries a PDN Type (type) which is made by a network side according to the UE request and a local policy.
Step S810, an Internet Protocol Connectivity Access Network (IP-CAN) session establishment operation is conducted between the PDN GW and the PCRF.
Step S812, The PDN GW updates the address of the PDN GW to an HSS through the AAA Server.
Step S814, The PDN GW sends the session establishment response and the proxy binding acknowledgement message to the TWAN.

It is noted that a tunnel is established between the TWAN and the P-GW after the steps S808 and S814, and a DHCPv4 protocol message and a DHCPv6 protocol message can be transmitted on the tunnel.

Steps S816-818, The TWAN replies a DHCP Offer (DHCP offering message) including a PDN Type option to the UE and notifies that the UE may establish a dual stack PDN connection. Alternatively, in a fast DHCP process, the DHCP Offer including the PDN Type option may not be returned.

Step S820, the UE receives a DHCP Ack (DHCP acknowledgement message) including a PDN Type option returned by the TWAN to the UE, wherein an IP address allocated by the TWAN to the UE and/or other configuration parameters, etc. are further carried in the DHCP Ack.

Step S822, the UE may send a DHCPv6 Solicit (DHCPv6 soliciting message) to a trusted non-3GPP access network for requesting an IPv6 prefix. Corresponding to the above packet data network connection identifier (GRE Key), the DHCPv6 message may be a message encapsulated by using the GRE Key.

Steps S824-S826, the TWAN replies a DHCP Advertise (DHCP advertising message) including a PDN Type option to the UE and informs the UE to establish the dual stack PDN connection. Alternatively, in a fast DHCP process, steps S824-S826 may be omitted.

Step S828, the TWAN replies a DHCPv6 Reply (DHCPv6 replying message) including a PDN Type option to the UE, which is used for allocating an IPv6 prefix and/or other configuration parameters, etc. to the UE.

Alternatively, when the IPv6 prefix is not acquired by the DHCPv6 process, the UE may carry the PDN Type option to be requested in the RS message, accordingly, the packet data network type decided by the network side is carried in the RA message replied to the UE by the network side.

### Example implementation 2

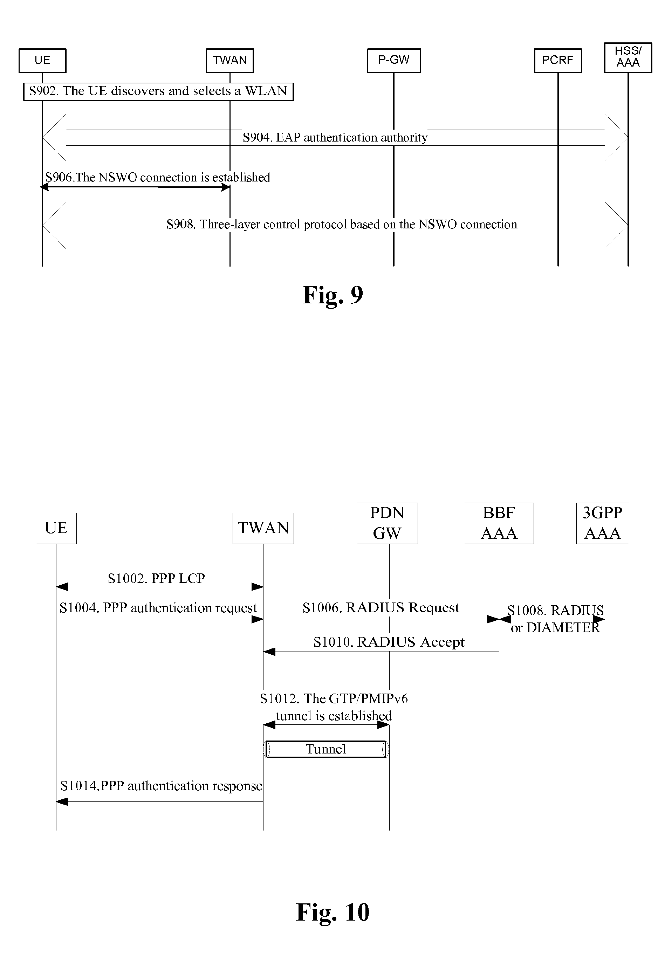

In this example embodiment, the UE firstly establishes a Non-Seamless WLAN Offload (NSWO) connection, and then the UE initiates to establish a subsequent packet data connection according to these three layers of NSWO connection. As shown in Fig. 9, the method includes the following steps.

Step S902, the UE discovers and selects a WLAN.

Step S904, the UE initiates an EAP authentication authority to a core network through a TWAN. The TWAN acquires subscription information of the UE from the Authentication Authorization Accounting (AAA)/HSS in this process, wherein the subscription information of the UE comprises all the authorization APNs and the packet data network connection types of theses APNs.

Step S906, the UE acquires an IPv4 address and an IPv6 prefix of the NSWO connection through the DHCP process and RS/RA process.

Step S908, the UE uses the IPv4 and IPv6 addresses of the NSWO connection as a source IP address to send a PDN connection establishment request to the TWAN, wherein the PDN connection establishment request carries a packet data network connection type. The TWAN sends a PDN connection establishment complete message to the UE, wherein the PDN connection establishment complete message also carries a packet data network connection type decided by the network side. The IPv4 address, IPv6 address and the corresponding packet data network connection identifier are issued.

### Example implementation 3

In this example implementation, the UE establishes a packet network data connection of which the PDN Type is IPv4/IPv6 by a PPP triggering request. Alternatively, as shown in Fig. 10, the following steps are included.

Step S1002, a PPP (Point to Point Protocol) link control protocol message (PPP LCP message) which comprises the packet data network type is transmitted between the UE and the trusted WLAN access network.

Steps S1004-S1010, the UE performs an authentication authority request process based on the PPP through the TWAN, and the TWAN acquires the subscription information of the UE from the AAA/HSS, wherein the authentication authority request process mainly comprises: a PPP authentication request, a radius request (RADIUS Request), a radius determination (RADIUS Determine) and a radius acception (RADIUS Accept).

Step S1012, the TWAN is triggered by the PPP message to establish a GTP/PMIPv6 tunnel to the PGW, and the PGW issues the IPv4 and IPv6 addresses corresponding to the PDN connection.

Steps S1014-S1016, the TWAN returns a PPP authentication response message to the UE so as to complete the PPP IPCP interaction and furthermore allocates the IPv4 address and the IPv6 prefix which are issued by the PGW to the UE.

### Example implementation 4

In this example implementation, several cases where the WLAN AN make a policy of the packet data network type of the UE according to the subscription information of the UE are mainly introduced.
1) When the UE requests a single IPv4 type, and the packet data network type in the user subscription information of the UE is an IPv4/IPv6 dual stack type or a single IPv4 type, the WLAN AN returns that the single IPv4 request is accepted, i.e. the packet data network type of the policy is the single IPv4 type; when the packet data network type in the user subscription information of the UE is a single IPv6 type, it is indicated that the single IPv4 type requested by the UE is not supported by the subscription information of the UE, the WLAN AN returns to the UE that the request is refused, or returns no message; it can be determined that the request is refused when the UE does not receive a returned response message within the predetermined period.
2) When the UE requests a single IPv6 type, and the packet data network type in the user subscription information of the UE is an IPv4/IPv6 dual stack type or a single IPv6 type, the WLAN AN returns that the single IPv6 request is accepted, i.e. the packet data network type of the policy is the single IPv6 type; when the packet data network type in the user subscription information of the UE is a single IPv4 type, it is indicated that the single IPv6 type requested by the UE is not supported by the subscription information of the UE, the WLAN AN returns to the UE that the request is refused, or returns no message; it can be determined that the request is refused when the UE does not receive a returned response message within the predetermined period.
3) When the UE requests an IPv4/IPv6 dual stack type, and the packet data network type in the user subscription information of the UE is an IPv4/IPv6 dual stack type, the WLAN AN returns that the IPv4/IPv6 dual stack type request is accepted, i.e. the packet data network type of the polity is the IPv4/IPv6 dual stack type; when the packet data network type in the user subscription information of the UE is a single IPv4 type or a single IPv6 type, it is indicated that the IPv4/IPv6 dual stack type requested by the UE is not supported by the subscription information of the UE, the WLAN AN returns to the UE the request is refused, or returns no message; it can be determined that the request is refused when the UE does not receive a returned response message within the predetermined period.

That is, only in the case where the packet data network type in the user subscription information of the UE is the IPv4/IPv6 dual stack type, all the packet data network type requests can be indicated.

In a further embodiment, a software is further provided, which is configured to perform the technical solution described in the above embodiments and the example implementations.

In a further embodiment, a storage medium is further provided. The storage medium stores the above software and comprises but is not limited to optical disks, floppy disks, hard disks, removable memory, etc.

It can be seen from the above description that it is realized in the example embodiment of the present invention the following technical effects: after the WLAN AN responds to the request message of the UE for requesting the packet data network type, it is judged whether the packet data network type requested by the request message is allowed, and the result is returned. By means of the above manner, it is solved the technical problem in the related art of waste of address resources, which caused by the fact that the addresses corresponding to the packet data network type in the subscription information of the UE are all directly allocated to the UE in advance, thereby achieving the technical effects of reducing the wasted address resources and improving the address resource utilization rate.

Obviously, those skilled in the art should know that each of the mentioned modules or steps of the embodiment of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the example embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

### Industrial Applicability

The technical solution of the embodiments of the present invention may be applied to the field of communications, a method, device and system for managing the packet data network type is provided to solve the technical problem in the related art of waste of address resources, which caused by the fact that the addresses corresponding to the packet data network type in subscription information of the UE are directly all directly allocated to the UE in advance, thereby achieving the technical effects of reducing the wasted address resources and improving the address resource utilization rate.

## Claims

1. A method for managing a packet data network type, **characterized by** comprising:
sending, by a User Equipment, UE, a request message to a Wireless Local Area Network Access Network, WLAN AN, wherein the request message carries a packet data network type requested by the UE; and
receiving, by the UE, an acknowledgement message returned by the WLAN AN to the UE, wherein the acknowledgement message carries a packet data network type decided by a network side.

2. The method according to claim 1, **characterized in that** the packet data network type requested by the UE comprises at least one of the following: a single Internet Protocol Version 4, IPv4, type, a single Internet Protocol Version 6, IPv6, type and an IPv4/IPv6 dual stack type, and the packet data network type decided by the network side comprises at least one of the following: a single IPv4 type, a single IPv6 type and an IPv4/IPv6 dual stack type.

3. The method according to claim 1, **characterized in that** the method further comprises:
judging, by the WLAN AN, whether the UE is allowed to establish a connection corresponding to the packet data network type requested by the UE according to one of the following information: subscription information of the UE at the network side, capacity of the WLAN AN and configuration information of the WLAN AN; and
based on that a judgment result is that the UE is allowed to establish the connection corresponding to the packet data network type requested by the UE, carrying, by the WLAN AN, in the acknowledgement message the packet data network type requested by the UE as the packet data network type decided by the network side; and based on that the judgment result is that the UE is not allowed to establish the connection corresponding to the packet data network type requested by the UE, refusing, by the WLAN AN, the packet data network type requested by the UE.

4. The method according to any one of claims 1 to 3, **characterized in that** in a condition that the packet data network type decided by the network side is the IPv4/IPv6 dual stack type, after receiving, by the UE, the acknowledgement message returned by the WLAN AN to the UE, the method further comprises:
acquiring, by the UE, a packet data network IPv4 address and a packet data network connection identifier through a Dynamic Host Configuration Protocol Version 4, DHCPv4, process; and
acquiring, by the UE, a packet data network IPv6 prefix through a Dynamic Host Configuration Protocol Version 6, DHCPv6, process, wherein the packet data network IPv4 address and the packet data network IPv6 prefix are allocated by a Packet Data Network GateWay, P-GW, to the UE.

5. The method according to claim 4, **characterized in that** acquiring, by the UE, the packet data network IPv6 prefix through the DHCPv6 process comprises:
sending, by the UE, a DHCPv6 message to the WLAN AN to request the packet data network IPv6 prefix, wherein the DHCPv6 message carries the packet data network connection identifier acquired in the DHCPv4 process, and/or the DHCPv6 message is a message encapsulated by using the packet data network connection identifier; and
receiving, by the UE, a DHCPv6 message returned by the WLAN AN, wherein the packet data network IPv6 prefix is carried in the DHCPv6 message returned by the WLAN AN.

6. The method according to any one of claims 1 to 3, **characterized in that** in a condition that the packet data network type decided by the network side is the IPv4/IPv6 dual stack type, after receiving, by the UE, the acknowledgement message returned by the WLAN AN to the UE, the method further comprises:
acquiring, by the UE, a packet data network IPv6 prefix and a packet data network connection identifier through a Dynamic Host Configuration Protocol Version 6, DHCPv6, process; and
acquiring, by the UE, a packet data network IPv4 address through a Dynamic Host Configuration Protocol Version 4, DHCPv4, process, wherein the packet data network IPv6 prefix and the packet data network IPv4 address are allocated by a Packet Data Network GateWay, P-GW, to the UE.

7. The method according to claim 6, **characterized in that** acquiring, by the UE, the packet data network IPv4 address through the DHCPv4 process comprises:
sending, by the UE, a DHCPv4 message to the WLAN AN to request the packet data network IPv4 address, wherein the DHCPv4 message carries the packet data network connection identifier acquired in the DHCPv6 process, and/or the DHCPv4 message is a message encapsulated by using the packet data network connection identifier; and
receiving, by the UE, a DHCPv4 message returned by the WLAN AN, wherein the packet data network IPv4 address is carried in the DHCPv4 message returned by the WLAN AN.

8. The method according to claim 5 or 7, **characterized in that** the packet data network connection identifier comprises: a Generic Routing Encapsulation, GRE, key and/or a Virtual Local Area Network IDentity, VLAN ID.

9. The method according to any one of claims 1 to 7, **characterized in that** sending, by the UE, the request message to the WLAN AN comprises:
triggering, by a message transmitted on a Non-Seamless WLAN Offload, NSWO, connection, the UE to request the packet data network type from the WLAN AN; and/or
triggering, by a Point to Point Protocol, PPP, the UE to request the packet data network type from the WLAN AN.

10. The method according to any one of claims 1 to 7, **characterized in that** the request message comprises at least one of the following: a DHCPv4 discovering message, a DHCPv6 request message and a Router Solicitation, RS, router request message; and the acknowledgement message comprises at least one of the following: a DHCPv4 offering message, a DHCPv4 acknowledgement message, a DHCPv6 advertising message, a DHCPv6 replying message and a Router Advertisement, RA message.

11. The method according to any one of claims 1 to 7, **characterized in that** the WLAN AN is a trusted WLAN access network.

12. A device for managing a packet data network type, located in a User Equipment, UE, comprising:
a sending element, configured to send a request message to a Wireless Local Area Network Access Network, WLAN AN, wherein the request message carries a packet data network type requested by the UE; and
a receiving element, configured to receive an acknowledgement message returned by the WLAN AN, wherein the acknowledgement message carries a packet data network type decided by a network side.

13. The device according to claim 12, **characterized by** further comprising:
a first acquiring element, configured to, in a condition that the packet data network type decided by the network side is an Internet Protocol Version 4/ Internet Protocol Version 6, IPv4/IPv6, dual stack type, and after the UE receives the acknowledgement message returned by the WLAN AN to the UE, acquire a packet data network IPv4 address and a packet data network connection identifier through a Dynamic Host Configuration Protocol Version 4, DHCPv4, process; and
a second acquiring element, configured to acquire a packet data network IPv6 prefix through a Dynamic Host Configuration Protocol Version 6, DHCPv6, process, wherein the packet data network IPv4 address and the packet data network IPv6 prefix are allocated by a Packet Data Network GateWay, P-GW, to the UE.

14. The device according to claim 13, **characterized in that** the second acquiring element comprises:
a sending component, configured to send a DHCPv6 message to the WLAN AN to request the packet data network IPv6 prefix, wherein the DHCPv6 message carries the packet data network connection identifier acquired in the DHCPv4 process, and/or the DHCPv6 message is a message encapsulated by using the packet data network connection identifier; and
a receiving component, configured to receive a DHCPv6 message returned by the WLAN AN, wherein the packet data network IPv6 prefix is carried in the DHCPv6 message returned by the WLAN AN.

15. A device for managing a packet data network type, located in a Wireless Local Area Network Access Network, WLAN AN, comprising:
a receiving element, configured to receive a request message sent by a User Equipment, UE, wherein the request message carries a packet data network type requested by the UE; and
a returning element, configured to return an acknowledgement message returned to the UE, wherein the acknowledgement message carries a packet data network type decided by a network side.

16. The device according to claim 15, **characterized in that** the returning element further comprises:
a judging component, configured to judge whether the UE is allowed to establish a connection corresponding to the packet data network type requested by the UE according to one of the following information: subscription information of the UE at the network side, capacity of the WLAN AN and configuration information of the WLAN AN; and
a returning component, configured to, based on that a judgment result is that the UE is allowed to establish the connection corresponding to the packet data network type requested by the UE, carry, in the acknowledgement message the packet data network type requested by the UE as the packet data network type decided by the network side, and based on that the judgment result is that the UE is not allowed to establish the connection corresponding to the packet data network type requested by the UE, refuse the packet data network type requested by the UE.

17. A system for managing a packet data network type, **characterized by** comprising: the UE provided with the device for managing the packet data network type as claimed in any one of claims 12 to 14, and the WLAN AN provided with the device for managing the packet data network type as claimed in claim 15 or 16.
